(19) Europäisches Patentamt
European Patent Office
Office européen des brevets

(11) **EP 4 477 803 A1**

(12) **EUROPEAN PATENT APPLICATION**

(43) Date of publication:
**18.12.2024 Bulletin 2024/51**

(21) Application number: **24179246.4**

(22) Date of filing: **31.05.2024**

(51) International Patent Classification (IPC):
**E01H 1/08** (2006.01)   **A01G 20/47** (2018.01)

(52) Cooperative Patent Classification (CPC):
**E01H 1/0809; A01G 20/47**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.06.2023 IT 202300012303**

(71) Applicant: **Stiga S.p.A.**
**31033 Castelfranco Veneto (TV) (IT)**

(72) Inventors:
• **PANDIN, Enrico**
**31020 Villorba (TV) (IT)**
• **TOLOTTO, Daniele**
**31040 Chiarano (TV) (IT)**

(74) Representative: **PGA S.p.A.**
**Via Mascheroni, 31**
**20145 Milano (IT)**

(54) **PORTABLE BLOWER**

(57) A portable blower (1) comprises: a structure (2), at least partially hollow, defining at least one conduit (3) for the transit of an air flow between a suction zone (4) and a blowing end (5), at which a blowing opening (10) of the portable blower (1) is defined; a flow generator device (6) operatively arranged inside the structure (2) and/or the conduit (3) which is switchable between a non-operating condition, in which no air flow is generated along the conduit (3), of the structure (2) and an operating condition, in which an air flow is generated along the conduit (3) of the structure (2) between the suction zone (4) and the blowing end (5) and/or the blowing opening (10); a protection grille (7) arranged along the conduit (3) of the structure (2) of the portable blower (1) between the flow generator device (6) and the blowing opening (10), in which the protection grille (7) has a substantially reticular structure (8) in which one or more elements (8a, 8b) of the reticular structure (8) have an aerodynamic profile (9), optionally a wing profile, defined between a rounded attachment edge (9a) facing the flow generator device (6) and an outlet edge (9c), and in which the aerodynamic profile (9) has a maximum thickness in an intermediate zone (9b) interposed between the attachment edge (9a) and the outlet edge (9c), in which one or more elements (8a, 8b) of the reticular structure (8) have at least one among an upper, or extrados, surface and a lower, or intrados, surface of convex shape.

FIG.7

EP 4 477 803 A1

**Description**

Technical field

The present invention relates to a portable blower of the type usable in outdoor areas, such as roads, gardens, parks and/or the like, for blowing and pushing leaves, small debris, garbage and the like.

Prior art

Several portable blowers are known which can be used in outdoor areas, such as roads, gardens, parks and/or the like, for blowing and pushing leaves, more or less small debris, garbage and the like.

Generally, the known portable blowers comprise a casing or hollow main body inside which a conduit is defined for the transit of an air flow between a suction zone and a blowing end. The casing can vary in shape and size depending on the model and type of portable blower considered. However, the casing of portable blowers generally has a substantially tubular structure which can be made in a single piece or defined by two or more portions appropriately connected to each other. The air transit conduit extends along the tubular structure to end with a blowing opening which, during use, is maintained by the user, oriented towards the area of the ground, the soil or the road on which it is desired to act by means of blowing.

In order to be able to generate a blowing air flow along the transit conduit, portable blowers are normally provided with corresponding flow generator devices, for example one or more axial impellers which are driven in rotation by suitable electric or endothermic motors. The flow generator devices usually reside inside the tubular structure or casing of portable blowers, with movable elements active inside the transit conduit.

Generally, for strictly safety-related reasons, the known portable blowers have one or more protection grilles arranged along the air passage between the flow generator device and the blowing opening and/or the suction zones. The main purpose of such protection grilles is to avoid and prevent unwanted contact between the moving parts of the flow generator devices and body parts of the users or of any other living being. In other words, if the end of a limb of the user or of a child or even the body part of an animal should, for any unknown reason, be located inside the transit conduit of the air through, for example, the blowing opening of the tubular structure or casing of the portable blower, the protection grille provided would prevent them from reaching the impeller(s), preventing the injury of the user, child or animal who has inserted a part of their body in the blowing opening.

The protection grilles normally provided on the known portable blowers have a reticular structure provided by two or more concentric and/or coaxial circumferential elements which are intersected by a plurality of radial elements. Such elements consist of classic structures having a round or rectangular profile in transverse section.

Although the protection grilles provided on the known portable blowers allow a satisfactory protection of people, children and/or animals from coming into contact with the moving parts of the flow generator devices thereof, the Applicant has found that the known protection grilles are not exempt from some drawbacks and can be improved in several respects, mainly in relation to the efficiency and quality of the blowing and output air flow from the blowing opening during the operation of the relative flow generator devices.

In particular, the Applicant has found that the profiles normally used in the protection grilles provided on portable blowers are inefficient in terms of aerodynamics as they give rise to excessive resistances, opposing the air flow generated, as well as unwanted and inefficient turbulence which causes numerous and disadvantageous recirculation in the air flow downstream of the protection grille.

Object of the invention

The main object of the present invention is to resolve one or more of the problems detected in the prior art.

It is an object of the present invention to propose a portable blower of the type usable in outdoor areas, such as roads, gardens, parks and/or the like, for blowing and pushing leaves, small debris, garbage and the like which prevents unwanted contacts between the moving parts of the respective flow generator and the body of users, children or animals, through the blowing opening and, at the same time, guarantees high levels of efficiency in relation to the aerodynamics of the protection grille.

It is a further object of the present invention to propose a portable blower whose resistance to the advancement of the air flow generated by the protection grille is eliminated or reduced as much as possible.

It is also an object of the present invention to propose a portable blower capable of producing a high-quality blowing air flow in output, understood as high homogeneity and/or linearity of the output air flow.

In fact, it is an object of the present invention to propose a portable blower capable of producing a substantially laminar blowing air flow in output, free or almost free of turbulence caused by the protection grille.

These objects and still others, which will appear more fully from the following disclosure, are substantially achieved by a portable blower of the type usable in outdoor areas, such as roads, gardens, parks and/or the like, for blowing and pushing leaves, small debris, garbage and the like in accordance with what is expressed in one or more of the appended claims and/or the following aspects, taken alone or in combination with each other.

Summary of the invention

The aspects of the invention are disclosed herein.

In a 1st independent aspect of the present invention, a portable blower (1) is provided comprising:

- a structure (2), at least partially hollow, defining at least one conduit (3) for the transit of an air flow between a suction zone (4) and a blowing end (5), at which a blowing opening (10) of the portable blower (1) is defined;
- a flow generator device (6) operatively arranged inside the structure (2) and/or the conduit (3) which is switchable between a non-operating condition, in which no air flow is generated along the conduit (3), of the structure (2) and an operating condition, in which an air flow is generated along the conduit (3) of the structure (2) between the suction zone (4) and the blowing end (5) and/or the blowing opening (10);
- a protection grille (7) arranged along the conduit (3) of the structure (2) of the portable blower (1) between the flow generator device (6) and the blowing opening (10), the protection grille (7) having a substantially reticular structure (8) in which one or more elements (8a, 8b) of the reticular structure (8) have an aerodynamic profile (9) defined between an attachment edge (9a) facing the flow generator device (6) and an outlet edge (9c), the aerodynamic profile (9) having maximum thickness in an intermediate zone (9b) interposed between the attachment edge (9a) and the outlet edge (9c), the one or more elements (8a, 8b) of the reticular structure (8) having at least one among an upper, or extrados, surface and a lower, or intrados, surface, of convex shape.

In a 2nd aspect in accordance with the preceding aspect, the upper or extrados surface of the aerodynamic profile (9) is a convex surface.

In a 3rd aspect in accordance with any one of the preceding aspects, the lower or intrados surface of the aerodynamic profile (9) is a convex surface.

In a 4th aspect in accordance with any one of the preceding aspects, the aerodynamic profile (9) is substantially symmetrical in transverse section.

In a 5th aspect in accordance with any one of the preceding aspects, the aerodynamic profile (9) is bi-convex, in particular symmetrical.

In a 6th aspect in accordance with any one of the preceding aspects, the aerodynamic profile (9) has the attachment edge (9a) substantially rounded.

In a 6th-bis aspect in accordance with any one of the preceding aspects, the aerodynamic profile (9) has the outlet edge (9c) tapered, optionally having a cusp or pointed shape.

In a 6th-ter aspect in accordance with any one of the aspects from the 1st to the 5th, the aerodynamic profile (9) has the outlet edge (9c) substantially rounded.

In a 6th-quater aspect, in accordance with the preceding aspect, the outlet edge of the aerodynamic profile (9) is rounded according to a radius of curvature not exceeding 0.5 mm, optionally substantially equal to 0.3 mm.

In a 7th aspect in accordance with any one of the preceding aspects, the attachment edge (9a) of the aerodynamic profile (9) is approximately an arc of circumference with a radius proportional to, in particular proportional to the square of, a maximum thickness of the aerodynamic profile (9) expressed as a fraction of the chord, defined as the imaginary segment joining the attachment edge (9a) to the outlet edge (9c) of the aerodynamic profile (9).

In an 8th aspect in accordance with any one of the preceding aspects, the attachment edge (9a) of the aerodynamic profile (9) is approximately an arc of circumference with radius (r) defined by:

$$r = 1{,}1 \cdot t^2$$

where t is the maximum thickness expressed as a fraction of the chord of the aerodynamic profile (9).

In a 9th aspect in accordance with any one of the preceding aspects, the aerodynamic profile (9) has a chord, defined as the imaginary segment joining the attachment edge (9a) to the outlet edge (9c) of the aerodynamic profile (9), with a straight trend.

In a 10th aspect in accordance with any one of the preceding aspects, the aerodynamic profile (9) is a NACA profile, in particular a symmetrical NACA profile.

In an 11th aspect in accordance with any one of the preceding aspects, the aerodynamic profile (9) is a symmetrical four-digit NACA profile.

In a 12th aspect in accordance with any one of the preceding aspects, the aerodynamic profile (9) is a four-digit NACA profile in which the first two digits are equal to zero, i.e., null.

In a 13th aspect in accordance with any one of the preceding aspects, the maximum thickness of the aerodynamic profile (9) is comprised between 10% and 20% of a length of the chord, defined as the imaginary segment joining the attachment edge (9a) to the outlet edge (9c) of the aerodynamic profile (9), in particular the maximum thickness of the aerodynamic profile (9) is 15% of the length of the chord.

In a 13th-bis aspect in accordance with any one of the preceding aspects, the maximum thickness of the aerodynamic profile (9) is comprised between 1 mm and 3.5 mm, optionally the maximum thickness is substantially equal to 2.25 mm.

In a 13th-ter aspect in accordance with any one of the preceding aspects, the aerodynamic profile (9) has a chord, defined as the imaginary segment joining the attachment edge (9a) to the outlet edge (9c) of the aerodynamic profile (9), having a length comprised between 5 mm and 35 mm, in particular substantially equal to 15 mm.

In a 13th-quater aspect in accordance with any one of the preceding aspects, the aerodynamic profile (9) is a NACA profile comprised in a range of NACA profiles between a NACA 0010 profile, optionally with a maximum thickness substantially equal to 3.5 mm, and a NACA 0020 profile, optionally with a maximum thickness substantially equal to 1 mm.

In a 14th aspect in accordance with any one of the preceding aspects, the aerodynamic profile (9) is a NACA 0015 profile. It should be noted that in this case, said t, the maximum thickness expressed as a fraction of the chord, $100 \cdot t$ will be equal to the last two digits of the NACA code.

In a 14th-bis aspect in accordance with any one of the preceding aspects, the aerodynamic profile (9) is a NACA 0015 profile with a maximum thickness substantially equal to 2.25 mm.

In a 15th aspect in accordance with any one of the preceding aspects, the shape of the aerodynamic profile (9) is generated using the relationship:

$$y_t = 5tc \left[ 0{,}2969 \sqrt{\frac{x}{c}} + (-0{,}1260)\left(\frac{x}{c}\right) + (-0{,}3516)\left(\frac{x}{c}\right)^2 + 0{,}2843\left(\frac{x}{c}\right)^3 + (-0{,}1015)\left(\frac{x}{c}\right)^4 \right].$$

in which:

- c is the length of the chord;
- x is the position along the chord from 0 to c;
- $y_t$ is half the thickness at a given value of x;
- t is the maximum thickness expressed as a fraction of the chord;

the coordinates of the wing back (x+, y+) and the coordinates of the wing belly (x-, y⁻) respectively being:

- wing back: x+=x and y+=y
- wing belly: x-=x and y⁻=-y

In a 16th aspect in accordance with any one of the preceding aspects, the aerodynamic profile (9) is a wing profile.

In a 17th aspect in accordance with any one of the preceding aspects, one or more elements (8a, 8b) of the protection grille (7) are a plurality of elements (8a, 8b), each having said aerodynamic profile (9).

In an 18th aspect in accordance with any one of the preceding aspects, the intermediate zone (9b) which is thickened with respect to the attachment edge (9a) and the outlet edge (9c) of the aerodynamic profile (9) of each element (8a, 8b) of the reticular structure (8) of the protection grille (7) has a greater thickness near the attachment edge (9a).

In a 19th aspect in accordance with any one of the preceding aspects, the intermediate zone (9b) which is thickened with respect to the attachment edge (9a) and the outlet edge (9c) of the aerodynamic profile (9) of each element (8a, 8b) of the reticular structure (8) of the protection grille (7) has a lesser thickness near the outlet edge (9c).

In a 20th aspect in accordance with the preceding aspect, the one or more elements (8a, 8b) of the reticular structure (8) of the protection grille (7) comprise:

- a first series of a plurality of elements (8a) arranged according to a first trend, in particular the first trend being an annular trend;
- a second series of a plurality of elements (8b) arranged in accordance with a second trend, in particular the second trend being a radial trend.

In a 21st aspect in accordance with any one of the aspects from the 1st to the 19th, the one or more elements (8a, 8b) of the reticular structure (8) of the protection grille (7) comprise:

- a first series of a plurality of elements (8a) arranged on a plane orthogonal to the longitudinal extension of the structure (2) and/or the conduit (3) of the portable blower (1), according to a first straight trend;

- a second series of a plurality of elements (8b) arranged on the same plane orthogonal to the longitudinal extension of the structure (2) and/or the conduit (3) of the portable blower (1) on which the elements (8a) of the first series are arranged, in accordance with a second straight trend transverse to the first trend, in particular orthogonal to the first trend.

In a 22nd aspect in accordance with any one of the two preceding aspects, the elements (8a) arranged according to the first trend have said aerodynamic profile (9) and/or the elements (8b) arranged in accordance with the second trend have said aerodynamic profile (9).

In a 23rd aspect in accordance with any one of the preceding aspects, the reticular structure (8) of the protection grille (7) comprises:

- at least one annular element (8a);
- a plurality of radial elements (8b) intersecting the annular element (8a).

In a 24th aspect in accordance with the preceding aspect, the at least one annular element (8a) has said aerodynamic profile (9) and extends substantially parallel to the inner profile of the conduit (3) of the structure (2) of the portable blower (1) at the position of the protection grille (7).

In a 25th aspect in accordance with any one of the two preceding aspects, the at least one annular element (8a) has a substantially circumferential extension.

In a 26th aspect in accordance with any one of the three preceding aspects, the at least one annular element (8a) is concentric to the conduit (3) and/or coaxial to the conduit (3) of the structure (2) of the portable blower (1).

In a 27th aspect in accordance with any one of the preceding aspects, the reticular structure (8) of the protection grille (7) comprises:

- two or more annular elements (8a);
- a plurality of radial elements (8b) intersecting the annular elements (8a).

In a 28th aspect in accordance with the preceding aspect, the annular elements (8a) of the reticular structure (8) of the protection grille (7) have said aerodynamic profile (9) and extend substantially coaxially to each other.

In a 29th aspect in accordance with any one of the two preceding aspects, the annular elements (8a) of the reticular structure (8) of the protection grille (7) each extend substantially parallel to the inner profile of the conduit (3) of the structure (2) of the portable blower (1) at the position of the protection grille (7).

In a 30th aspect in accordance with any one of the three preceding aspects, at least one of the annular elements (8a) of the reticular structure (8) of the protection grille (7) has a substantially circumferential extension.

In a 31st aspect in accordance with any one of the four preceding aspects, each of the annular elements (8a) of the reticular structure (8) of the protection grille (7) has a substantially circumferential extension.

In a 32nd aspect in accordance with any one of the five preceding aspects, at least one of the annular elements (8a) of the reticular structure (8) of the protection grille (7) is concentric and/or coaxial to another annular element (8a) of the same reticular structure (8), optionally all the annular elements (8a) of the reticular structure (8) of the protection grille (7) are concentric and/or coaxial.

In a 33rd aspect in accordance with any one of the six preceding aspects, at least one of the annular elements (8a), optionally each of the annular elements (8a), of the reticular structure (8) of the protection grille (7) is concentric and/or coaxial to the conduit (3) of the structure (2) of the portable blower (1).

In a 34th aspect in accordance with any one of the eleven preceding aspects, each radial element (8b) of the reticular structure (8) of the protection grille (7) has said aerodynamic profile (9) and extends substantially perpendicular to at least one annular element (8a) of the same reticular structure (8).

In a 35th aspect in accordance with any one of the twelve preceding aspects, each radial element (8b) of the reticular structure (8) of the protection grille (7) has at least one portion (8d) extending according to an inclined orientation with respect to at least one annular element (8a) of the same reticular structure (8), optionally each radial element (8b) of the reticular structure (8) of the protection grille (7) having at least one portion (8d) extending according to an inclined orientation with respect to at least one radial reference plane substantially orthogonal to an annular element (8a) of the same reticular structure (8).

In a 36th aspect in accordance with any one of the thirteen preceding aspects, in which each radial element (8b) of the reticular structure (8) of the protection grille (7) has a portion (8d) extending according to an arched or curved extension with respect to at least one annular element (8a) of the same reticular structure (8), optionally each radial element (8b) of the reticular structure (8) of the protection grille (7) having a portion (8d) extending according to an arched or curved extension with respect to a radial reference plane orthogonal with respect to at least one annular element (8a) of the same reticular structure (8).

In a 37th aspect in accordance with any one of the nine preceding aspects, each radial element (8b) of the reticular structure (8) of the protection grille (7) has:

- a first portion (8c) extending substantially perpendicularly to at least one annular element (8a) of the same reticular structure (8), optionally to the outermost annular element (8a) of the reticular structure (8), in particular to the annular element (8a) of the reticular structure (8) closest to the inner profile of the conduit (3) of the structure (2) of the portable blower (1);
- a second portion (8d) extending at least in part according to an inclined orientation with respect to at least one annular element (8a) of the reticular structure (8), optionally to the annular element (8a) of the innermost reticular structure (8), in particular to the annular element (8a) of the reticular structure (8) farthest from the inner profile of the conduit (3) of the structure (2) of the portable blower (1).

In a 38th aspect in accordance with the preceding aspect, the first portion (8c) of each radial element (8b) of the reticular structure (8) of the protection grille (7) defines with the annular element (8a) of the same reticular structure (8) in the engagement point with the latter, two angles which are each opposite by about 90°, optionally the first portion (8c) of each radial element (8b) of the reticular structure (8) of the protection grille (7) defining with the inner profile of the conduit (3) of the structure (2) of the portable blower (1) in the engagement point of the radial element (8b) to the structure (2) of the portable blower (1), two angles which are each opposite by about 90°.

In a 39th aspect in accordance with any one of the two preceding aspects, the second portion (8d) of each radial element (8b) of the reticular structure (8) of the protection grille (7) defines with each of the annular elements (8a) of the reticular structure (8) of the protection grille (7) two different angles which are each opposite by a 90° angle, one angle being acute and the other being obtuse.

In a 40th aspect in accordance with any one of the 37th and 38th aspects, the second portion (8d) of each radial element (8b) of the reticular structure (8) of the protection grille (7) defines with the annular element (8a) of the innermost reticular structure (8), optionally the annular element (8a) of the reticular structure (8) farthest from the inner profile of the conduit (3) of the structure (2) of the portable blower (1), two different angles which are opposite by a 90° angle, one angle being acute and the other being obtuse.

In a 41st aspect in accordance with any one of the 37th, 38th or 40th aspects, the second portion (8d) of each radial element (8b) of the reticular structure (8) of the protection grille (7) defines with the annular element (8a) of the outermost reticular structure (8), optionally the annular element (8a) of the reticular structure (8) closest to the inner profile of the conduit (3) of the structure (2) of the portable blower (1), two opposite angles of about 90°.

In a 42nd aspect in accordance with any one of the preceding five aspects, the second portion (8d) of each radial element (8b) of the reticular structure (8) of the protection grille (7) has, at least in part, optionally completely, an arched and/or curved extension.

In a 43rd independent aspect, clearly combinable with any one of the preceding aspects or with any one of the following aspects, a portable blower (1) is provided comprising:

- a structure (2), at least partially hollow, defining at least one conduit (3) for the transit of an air flow between a suction zone (4) and a blowing end (5), at which a blowing opening (10) of the portable blower (1) is defined;
- a flow generator device (6) operatively arranged inside the structure (2) and/or the conduit (3) which is switchable between a non-operating condition, in which no air flow is generated along the conduit (3) of the structure (2) and an operating condition, in which an air flow is generated along the conduit (3) of the structure (2) between the suction zone (4) and the blowing end (5) and/or the blowing opening (10);
- at least one protection grille (7) arranged along the conduit (3) of the structure (2) of the portable blower (1) between the flow generator device (6) and the blowing opening (10), the protection grille (7) having a substantially reticular structure (8) comprising:

  ○ at least one annular element (8a) extending substantially parallel to the inner profile of the conduit (3) of the structure (2) of the portable blower (1) at the position of the protection grille (7), optionally according to a substantially circumferential extension.
  ○ a plurality of radial elements (8b) intersecting the circular element (8a), each radial element (8b) of the reticular structure (8) of the protection grille (7) having at least one portion (8d) extending according to an inclined orientation with respect to at least one annular element (8a) of the same reticular structure (8), optionally each radial element (8b) of the reticular structure (8) of the protection grille (7) having at least one portion (8d) extending according to an inclined orientation with respect to at least one radial reference plane substantially orthogonal to an annular element (8a) of the same reticular structure (8).

In a further 44th independent aspect, clearly combinable with any one of the preceding aspects and/or with any one of the following aspects, a portable blower (1) is provided comprising:

- a structure (2), at least partially hollow, defining at least one conduit (3) for the transit of an air flow between a suction zone (4) and a blowing end (5), at which a blowing opening (10) of the portable blower (1) is defined;
- a flow generator device (6) operatively arranged inside the structure (2) and/or the conduit (3) which is switchable between a non-operating condition, in which no air flow is generated along the conduit (3) of the structure (2) and an operating condition, in which an air flow is generated along the conduit (3) of the structure (2) between the suction zone (4) and the blowing end (5) and/or the blowing opening (10);
- at least one protection grille (7) arranged along the conduit (3) of the structure (2) of the portable blower (1) between the flow generator device (6) and the blowing opening (10), the protection grille (7) having a substantially reticular structure (8) comprising:

  ○ two or more annular elements (8a) extending substantially parallel to each other, optionally substantially parallel to the inner profile of the conduit (3) of the structure (2) of the portable blower (1) at the position of the protection grille (7), in particular each annular element (8a) of the reticular structure (8) of the protection grille (7) extending according to a substantially circumferential extension;
  ○ a plurality of radial elements (8b) intersecting the annular elements (8a), each radial element (8b) of the reticular structure (8) of the protection grille (7) having:

    ■ a first portion (8c) extending substantially perpendicularly to at least one annular element (8a) of the same reticular structure (8), optionally to the outermost annular element (8a) of the reticular structure (8), in particular to the annular element (8a) of the reticular structure (8) closest to the inner profile of the conduit (3) of the structure (2) of the portable blower (1);
    ■ a second portion (8d) extending at least in part according to an inclined orientation with respect to at least one annular element (8a) of the reticular structure (8), optionally to the annular element (8a) of the innermost reticular structure (8), in particular to the annular element (8a) of the reticular structure (8) farthest from the inner profile of the conduit (3) of the structure (2) of the portable blower (1).

In a 45th aspect in accordance with any one of the two preceding aspects, at least one element (8a, 8) of the reticular structure (8) of the protection grille (7) has an aerodynamic profile (9) defined between a rounded attachment edge (9a) facing the flow generator device (6) and an outlet edge (9c), the aerodynamic profile (9) having maximum thickness in an intermediate zone (9b) interposed between the attachment edge (9a) and the outlet edge (9c), the one or more elements (8a, 8b) of the reticular structure (8) having at least one among an upper, or extrados, surface and a lower, or intrados, surface, of convex shape.

In a 46th in accordance with the preceding aspect, the aerodynamic profile (9) is in accordance with one or more of the preceding aspects from 2 to 19.

In a 47th aspect in accordance with any one of the four preceding aspects, the at least one annular element (8a) of the reticular structure (8) of the protection grille (7) is concentric and/or coaxial to the conduit (3) of the structure (2) of the portable blower (1).

In a 48th aspect in accordance with any one of the preceding five aspects, at least one of the annular elements (8a) of the reticular structure (8) of the protection grille (7) is concentric and/or coaxial to another annular element (8a) of the same reticular structure (8), optionally all the annular elements (8a) of the reticular structure (8) of the protection grille (7) being concentric and/or coaxial.

In a 49th aspect in accordance with any one of the six preceding aspects, each of the annular elements (8a) of the reticular structure (8) of the protection grille (7) is concentric and/or coaxial to the conduit (3) of the structure (2) of the portable blower (1).

In a 50th aspect in accordance with any one of the seven preceding aspects, in which each radial element (8b) of the reticular structure (8) of the protection grille (7) has a portion (8d) extending according to an arched or curved extension with respect to at least one annular element (8a) of the same reticular structure (8), optionally each radial element (8b) of the reticular structure (8) of the protection grille (7) having a portion (8d) extending according to an arched or curved extension with respect to a radial reference plane orthogonal with respect to at least one annular element (8a) of the same reticular structure (8).

In a 51st aspect in accordance with aspect 44 or any one of the aspects from the 45th to the 50th, when dependent on the 44th aspect, the first portion (8c) of each radial element (8b) of the reticular structure (8) of the protection grille (7) defines with the annular element (8a) of the same reticular structure (8) in the engagement point with the latter, two angles which are each opposite by about 90°, optionally the first portion (8c) of each radial element (8b) of the reticular structure (8) of the protection grille (7) defining with the inner profile of the conduit (3) of the structure (2) of the portable blower (1) in the engagement point of the radial element (8b) to the structure (2) of the portable blower (1), two angles which are each opposite by about 90°.

In a 52nd aspect in accordance with the 44th aspect or any one of the aspects from the 45th to the 51st, when dependent on the 44th aspect, the second portion (8d) of each radial element (8b) of the reticular structure (8) of the protection grille (7) defines with the annular element (8a) of the innermost reticular structure (8), optionally the annular element (8a) of the reticular structure (8) farthest from the inner profile of the conduit (3) of the structure (2) of the portable blower (1), two different angles which are opposite by a 90° angle, one angle being acute and the other being obtuse.

In a 53rd aspect in accordance with the 44th aspect or any one of the aspects from the 45th to the 52nd, when dependent on the 44th aspect, the second portion (8d) of each radial element (8b) of the reticular structure (8) of the protection grille (7) defines with the annular element (8a) of the outermost reticular structure (8), optionally the annular element (8a) of the reticular structure (8) closest to the inner profile of the conduit (3) of the structure (2) of the portable blower (1), two opposite angles of about 90°.

In a 54th in accordance with the 44th aspect or any of the aspects from the 45th to the 53rd, when dependent on the 44th aspect, the second portion (8d) of each radial element (8b) of the reticular structure (8) of the protection grille (7) has at least in part, optionally completely, an arched and/or curved extension.

In a 55th aspect in accordance with the 44th aspect or any one of the aspects from the 45th to the 52nd, when dependent on the 44th aspect, the second portion (8d) of each radial element (8b) of the reticular structure (8) of the protection grille (7) defines, with each of the annular elements (8a) of the reticular structure (8) of the protection grille (7), two different angles which are each opposite by a 90° angle, one angle being acute and the other being obtuse. In a 56th aspect in accordance with any one of the preceding aspects, each element (8a, 8b) of the reticular structure (8) of the protection grille (7) has a maximum thickness comprised between 1 mm and 3.5 mm, optionally substantially equal to 2.25 mm.

In a 57th aspect in accordance with any one of the preceding aspects, each element (8a, 8b) of the reticular structure (8) of the protection grille (7) has a longitudinal extension detectable along the longitudinal extension of the conduit (3) of the structure (2) of the portable blower (1) comprised between 5 mm and 35 mm, optionally substantially equal to 15 mm.

In a 58th aspect in accordance with any one of the preceding aspects, the protection griller (7) is made of plastic.

In a 59th aspect in accordance with any one of the preceding aspects, the protection grille (7) is made of Acrylonitrile Butadiene Styrene (ABS).

In a 59th bis aspect in accordance with any one of the aspects from the 1st to the 58th, the protection grille (7) is made of Polycarbonate (PC).

In a 59th-ter aspect in accordance with any one of the aspects from the 1st to the 58th, the protection grille (7) is made of Polyamide (PA).

In a 59th-quater aspect in accordance with any one of the aspects from the 1st to the 58th, the protection grille (7) is made of polyamide (PA) reinforced with glass fibres.

In a 60th aspect in accordance with any one of the preceding aspects, the protection grille (7) is removably engaged to the conduit (3) of the structure (2) of the portable blower (1).

In a 61st aspect in accordance with any one of the preceding aspects, the protection grille (7) is removably engaged to a substantially tubular body (11) connectable to the structure (2) of the portable blower (1) or to a blowing accessory (12) of the latter, the tubular body (11) defining a portion of the conduit (3) of the structure (2) of the portable blower (1) when connected to the latter.

In a 62nd aspect in accordance with any one of the aspects from the 1st to the 59th, the protection grille (7) is removably engaged to a blowing accessory (12) of the portable blower (1).

In a 63rd aspect in accordance with any one of the aspects from the 1st to the 59th, the protection grille (7) is joined in a single piece with the conduit (3) of the structure (2) of the portable blower (1).

In a 64th aspect in accordance with any one of the aspects from the 1st to the 59th, the protection grille (7) is joined in a single piece with a substantially tubular body (11) connectable to the structure (2) and of the portable blower (1) or to a blowing accessory (12) of the latter, the tubular body (11) defining a portion of the conduit (3) of the structure (2) of the portable blower (1) when connected to the latter.

In a 65th aspect in accordance with any one of the aspects from the 1st to the 59th, the protection grille (7) is joined in a single piece with a blowing accessory (12) of the portable blower (1).

In a 66th aspect in accordance with any one of the preceding aspects, the portable blower (1) comprises at least one handle portion (2a) arranged on the structure (2) for manual engagement by a user.

In a 67th aspect in accordance with the preceding aspect, the handle portion (2a) is made at or near the suction zone (4).

In a 68th aspect in accordance with any one of the two preceding aspects, the handle portion (2a) is provided with a drive control (2b), optionally a double drive control for safely starting the flow generator device (6) by the user using both hands.

In a 69th aspect in accordance with any one of the three preceding aspects, the handle portion (2a) is provided with a control command (2c) of the intensity of the air flow produced by the air flow generator device (6).

In a 70th aspect in accordance with any one of the preceding aspects, the portable blower (1) has an electrical power supply.

In a 71st aspect in accordance with the preceding aspect, the flow generator device (6) is electrically powered by means of at least one battery, in particular rechargeable, optionally the at least one battery being housable in a seat (2d) provided with corresponding contacts and/or electrical conductors made and/or obtained in a rear appendage (2e) of the structure (2) of the portable blower (1).

Further features and advantages will become more apparent from the detailed description of a preferred, but not exclusive, embodiment of a portable blower in accordance with the above-listed aspects, the following claims and the attached figures.

Brief description and drawings

A detailed description of one or more preferred embodiments of the invention is given below by way of non-limiting example, in which:

- figure 1 is a perspective view of a portable blower of the type usable in outdoor areas, such as roads, gardens, parks and/or the like, for blowing and pushing leaves, small debris, garbage and the like, in accordance with the present invention;
- figure 2 is a longitudinal section of the portable blower of figure 1;
- figure 3 is an enlarged view of a detail of a protection grille of the portable blower of figures 1 and 2;
- figure 4 is a perspective view of a component of the blower illustrated in figures 1 and 2;
- figure 5 is an elevational front view of the component of figure 4;
- figure 6 is an elevational rear view of the component of figures 4 and 5.
- Figure 7 is a schematic depiction of a preferred embodiment solution of the present invention in which the profile of the protection grille of the portable blower 1 is the same for each segment or point of the grille.

Detailed description

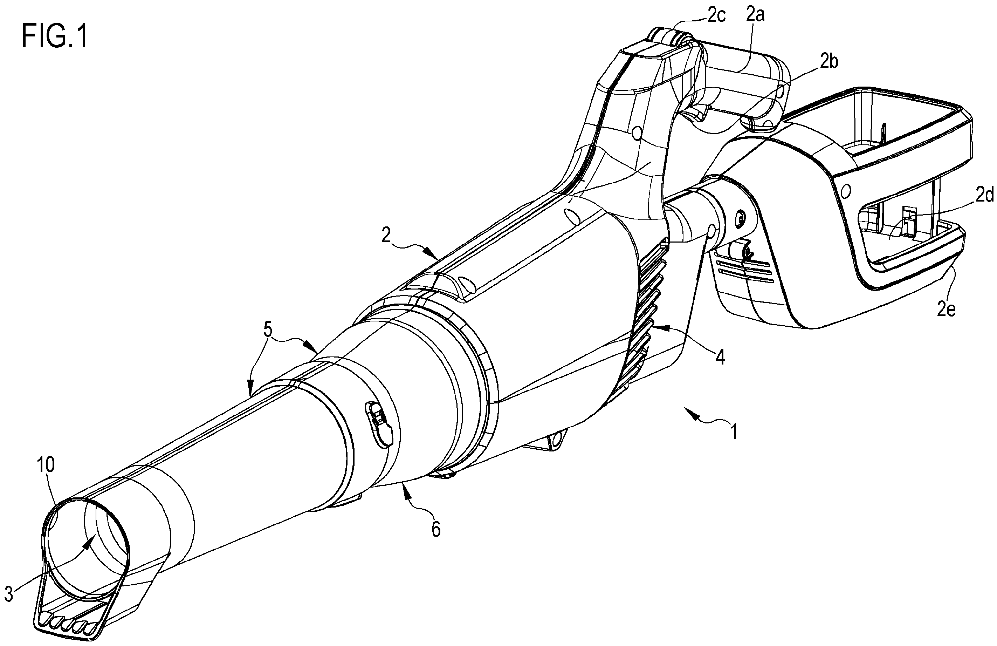

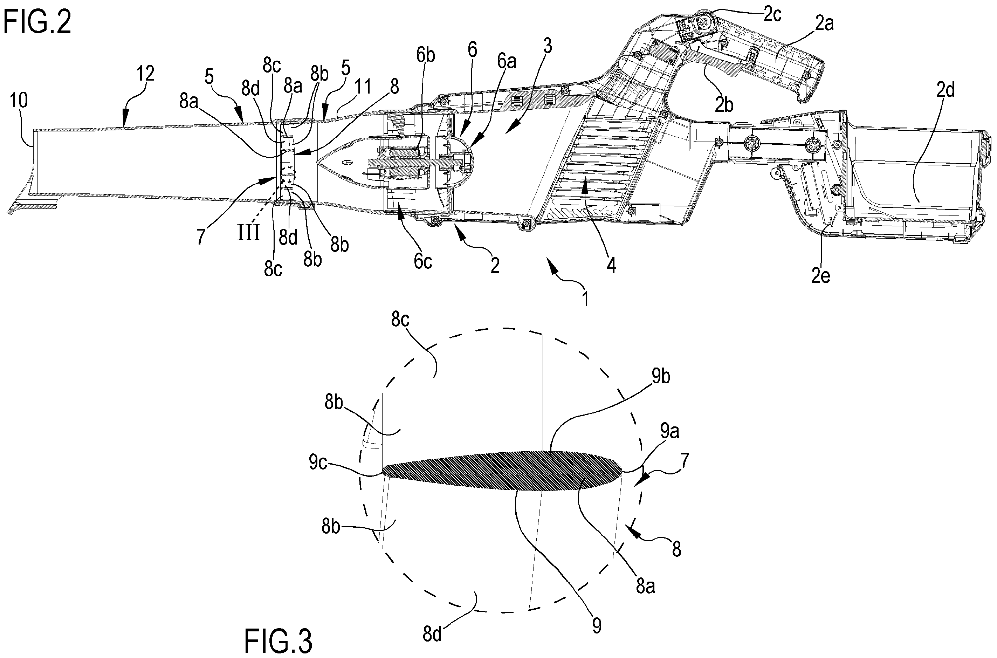

With reference to figures 1 and 2, a portable blower 1 is illustrated which is intended for maintenance operations, and/or cleaning outdoor areas, such as roads, gardens, parks and/or the like. In particular, the portable blower 1 is used for the removal, by means of air blowing, of leaves, small debris, garbage and any other small body, object or item, present and bulky on the ground, soil or road to be cleaned.

In detail, the portable blower 1 comprises a structure 2, at least partially hollow, defining at least one conduit 3 intended for the transit of an air flow between a suction zone 4 and a blowing end 5, towards a blowing opening 10 of the portable blower 1.

The portable blower 1 further comprises a flow generator device 6 (figure 2) having a fan/impeller p 6a for the movement of the air, which is controlled in rotation by a corresponding motor 6b, preferably of the electrical type, and a blade straightener 6c arranged downstream of the impellers/fan 6a in the advancement direction of the air flow from the suction zone 4 and to the blowing opening 10.

The flow generator 6 is switchable between a non-operating condition, in which no air flow is generated along the conduit 3 of the structure 2 and an operating condition, in which an air flow is generated along the conduit 3 to exit through the corresponding blowing opening 10.

As visible in figures 1 and 2, the portable blower 1 is provided with at least one handle portion 2a arranged on the structure 2 for manual engagement by a user. The handle portion 2a is made between the suction zone 4 and the blowing end 5, in particular near or at the suction zone 4, so as to facilitate the use of the portable blower 1 even by non-expert users who use the portable blower 1 solely for domestic purposes.

The handle portion 2a is provided with at least one drive control 2b for starting the flow generator device. In order to ensure high safety levels during the use of the portable blower 1, the handle 2a can be provided with a double drive control for safely starting the air flow generator which must use both hands to operate the portable blower 1.

In addition, as visible in figures 1 and 2, the handle 2a can be provided with a power variator or a control device 2c, optionally with a wheel or roller, which allows the adjustment of the number of revolutions of the components of the flow generator device 6 and consequently of the intensity or speed of the output and blowing air flow.

The portable blower 1 further has an electrical power supply, preferably battery-powered, in particular rechargeable. The battery (not illustrated in the attached figures) can be housed in a special seat 2d provided with suitable contacts and electrical conductors which is obtained at a rear appendage 2e of the structure 2 of the portable blower 1.

The portable blower 1 also comprises, along the conduit 3 of the structure 2, downstream of the air flow generator device 6, at least one protection grille 7 with the purpose of creating a physical barrier between the air flow generator device 6 and the blowing opening 10. The protection grille 7 prevents reaching the air flow generator device 6 along the conduit 3 of the structure 2 through the blowing opening 10, so as to protect anyone from coming into contact with moving or hot parts of the portable blower 1 which can cause physical damage or injury.

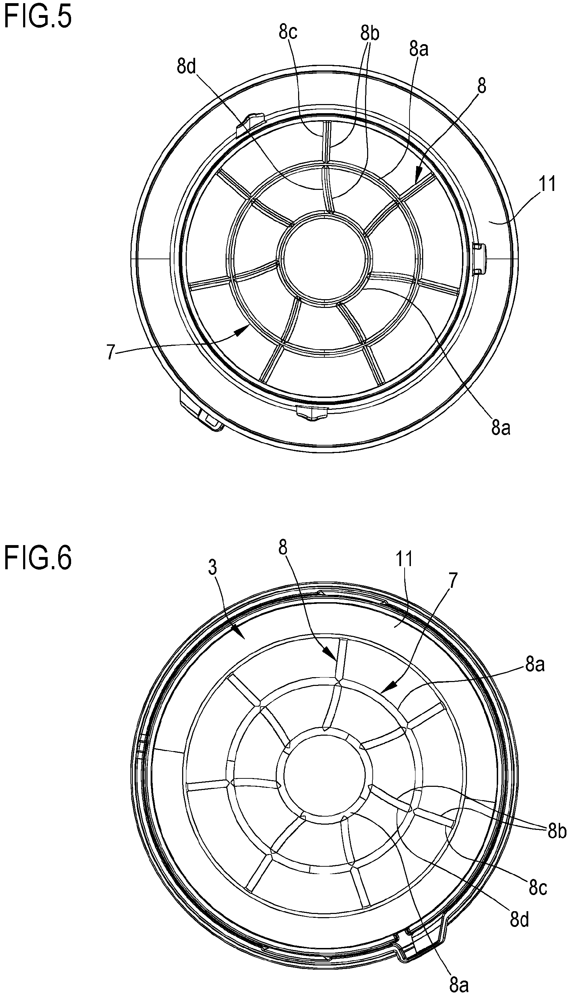

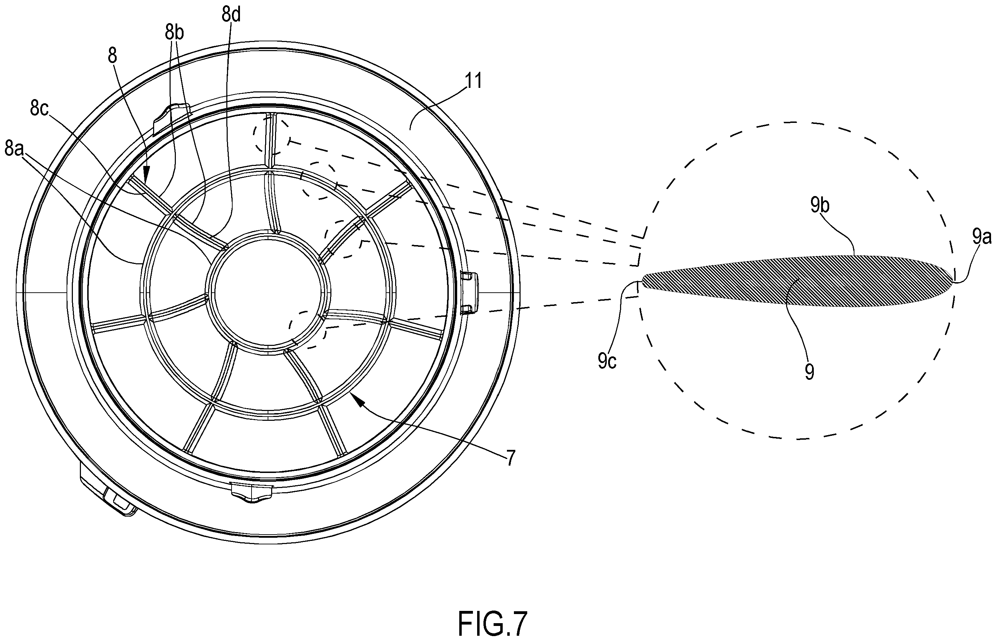

As visible in figures 2 to 7, the protection grille 7 is arranged along the conduit 3 of the structure 2 of the portable blower 1 between the flow generator device 6 and the blowing opening 10. The protection grille 7 has a substantially reticular structure 8 in which one or more elements 8a, 8b of said reticular structure 8, preferably all the elements 8a, 8b, have an aerodynamic wing profile 9 (figures 3 and 7) defined between an attachment edge 9a, substantially rounded and facing the flow generator device 6 and an outlet edge 9c, tapered, optionally cusped or rounded, facing the blowing opening 10 of the portable blower 1.

In the embodiment solution illustrated in figures 3 and 7, the outlet edge 9c of the aerodynamic profile 9 of each element 8a, 8b of the reticular structure 8 of the protection grille 7 is rounded according to a radius of curvature not exceeding 0.5 mm, in particular substantially equal to 0.3 mm.

The aerodynamic profile 9 of each of the elements 8a, 8b of the reticular structure 8 of the protection grille 7 has a maximum thickness in an intermediate zone 9b interposed between the attachment edge 9a and the outlet edge 9c with at least one among an upper, or extrados, surface and a lower, or intrados, surface of convex shape.

The intermediate zone 9b which is thickened with respect to the attachment edge 9a and the outlet edge 9c of the aerodynamic profile 9 of each element 8a, 8b of the reticular structure 8 of the protection grille 7 has a greater thickness near the attachment edge 9a and/or a lesser thickness near the outlet edge 9c.

In accordance with the embodiment solution illustrated in figures 3 and 7, the aerodynamic profile 9 of each of the elements 8a, 8b of the reticular structure 8 of the protection grille 7, has both an upper or extrados convex surface, and a lower or intrados convex surface.

Always in accordance with the embodiment solution illustrated in figures 3 and 7, the aerodynamic profile 9 of each of the elements 8a, 8b of the reticular structure 8 of the protection grille 7 is substantially symmetrical in transverse section, thus resulting in a symmetrical biconvex aerodynamic profile 9.

The attachment edge 9a of the aerodynamic profile 9 of each of the elements 8a, 8b of the reticular structure 8 of the protection grille 7 is approximately an arc of circumference having a radius proportional to, in particular proportional to the square of, a maximum thickness of the aerodynamic profile 9 expressed as a fraction of the chord, defined as the imaginary segment joining the attachment edge 9a to the outlet edge 9c of the aerodynamic profile 9.

In more detail, the attachment edge 9a of the aerodynamic profile 9 is approximately an arc of circumference with radius (r) defined by:

$$r = 1{,}1 \cdot t^2$$

where t is the maximum thickness expressed as a fraction of the chord of the aerodynamic profile 9. It is preferable that the chord of the aerodynamic profile 9 has a straight trend.

Advantageously, the aerodynamic profile 9 of each of the elements 8a, 8b of the reticular structure 8 of the protection grille 7 is a NACA profile, in particular symmetrical, even more in particular four-digit symmetrical, optionally in which the first two digits are equal to zero, i.e., null. The maximum thickness of the aerodynamic profile 9 is comprised between 10% and 20% of the length of the chord, in particular 15%.

It is therefore possible to provide NACA profiles having a maximum thickness comprised between 1 mm and 3.5 mm and chord length between the attachment edge 9a and the outlet edge 9c comprised between 5 mm and 35 mm. It is therefore possible to provide a range of NACA profiles comprised between a NACA 0010 profile with a maximum thickness of about 1 mm and a NACA 0020 profile with a maximum thickness of about 3.5 mm.

In accordance with the embodiment solution illustrated in figures 3 and 7, the aerodynamic profile 9 of each of the elements 8a, 8b of the reticular structure 8 of the protection grille 7 is a NACA 0015 profile, in which the maximum thickness of the profile is approximately 2.25 mm and the length of the chord between the attachment edge 9a and the outlet edge 9c is approximately 15 mm. It should be noted that, said t the maximum thickness expressed as a fraction of the chord, 100·t will be equal to the last two digits of the NACA code.

In particular, the shape of the aerodynamic profile 9 of each of the elements 8a, 8b of the reticular structure 8 of the protection grille 7 is generated using the relationship:

$$y_t = 5tc \left[ 0{,}2969\sqrt{\frac{x}{c}} + (-0{,}1260)\left(\frac{x}{c}\right) + (-0{,}3516)\left(\frac{x}{c}\right)^2 + 0{,}2843\left(\frac{x}{c}\right)^3 + (-0{,}1015)\left(\frac{x}{c}\right)^4 \right]$$

in which:

- c is the length of the chord;
- x is the position along the chord from 0 to c;
- $y_t$ is half the thickness at a given value of x;
- $t$ is the maximum thickness expressed as a fraction of the chord;

the coordinates of the wing back (x+, y+) and the coordinates of the wing belly (x-, y-) respectively being:

- wing back: x+=x and y+=y
- wing belly: x-=x and y-=-y

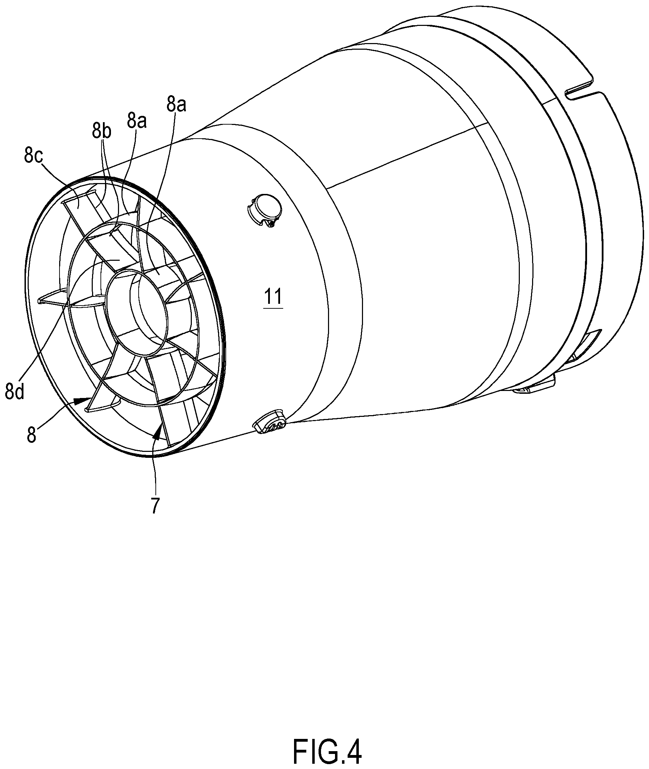

As visible in figures 4 to 7, the illustrated embodiment solution envisages that the reticular structure 8 of the protection grille 7 comprises a first series of a plurality of elements 8a arranged according to a first trend, i.e., an annular trend, and a second series of a plurality of elements 8b arranged in accordance with a second trend, i.e., a radial trend. However, it should be noted that alternative embodiment solutions which envisage different configurations in the interwoven arrangement of the elements 8a, 8b of the reticular structure 8 of the protection grille 7 can be used as long as such elements 8a, 8b have the aerodynamic profile 9 described above.

In fact, it is possible to envisage that the reticular structure 8 of the protection grille 7 comprises a first series of a plurality of elements 8a arranged on a plane orthogonal to the longitudinal extension of the structure 2 and/or of the conduit 3 of the portable blower 1, according to a first straight trend and a second series of a plurality of elements 8b arranged on the same plane orthogonal to the longitudinal extension of the structure 2 and/or of the conduit 3 of the portable blower 1 on which the elements 8a of the first series are arranged, in accordance with a second transverse straight trend, in particular orthogonal to the first trend.

Always in accordance with the embodiment solution illustrated in figures 4 to 7, the reticular structure 8 of the protection grille 7 comprises two annular elements 8a, which extend coaxially with each other, each according to a substantially circumferential extension. Furthermore, the annular elements 8a each extend substantially parallel to the inner profile of the conduit 3 of the structure 2 of the portable blower 1, being coaxial and/or concentric to such a conduit 3 in the lying plane of the protection grille 7.

The reticular structure 8 of the protection grille 7 comprises a plurality of radial elements 8b intersecting the annular elements 8a. Each radial element 8b has a first portion 8c extending substantially perpendicularly to the outermost annular element 8a of the reticular structure 8, i.e., to the annular element 8a closest to the inner profile of the conduit 3 of the structure 2 of the portable blower 1 and a second portion 8d extending at least in part according to an inclined orientation with respect to the annular element 8a of the innermost reticular structure 8, i.e., to the annular element 8a farthest from the inner profile of the conduit 3 of the structure 2 of the portable blower 1.

The first portion 8c of each radial element 8b defines, both with the outermost annular element 8a of the reticular structure 8, i.e., with the annular element 8a closest to the inner profile of the conduit 3 of the structure 2 of the portable blower 1, and with the inner profile of the conduit (3) of the structure (2) of the portable blower (1) at the engagement point of the radial element 8b with the structure 2 of the portable blower 1, two angles which are each opposite by about 90°, two angles which are each opposite by about 90°.

In accordance with the embodiment solution illustrated in figures 4 to 7, the second portion 8d of each radial element 8b defines with the innermost annular element 8a, optionally the annular element 8a farthest from the inner profile of the conduit 3 of the structure 2 of the portable blower 1, two different angles which are each opposite by a 90° angle, in which one angle is acute and the other obtuse, and defines with the outermost annular element 8a, optionally the annular element 8a closest to the inner profile of the conduit 3 of the structure 2 of the portable blower 1, two opposite angles of approximately 90°.

The second portion 8d of each radial element 8b of the reticular structure 8 of the protection grille 7 has an arched or curved extension intersecting, substantially orthogonally, the annular element 8a which is outermost or closest to the inner profile of the conduit 3 of the structure 2 of the portable blower 1 and joining, according to an inclined orientation, the annular element 8a which is innermost or farthest from the inner profile of the conduit 3 of the structure 2 of the portable blower 1.

In accordance with a possible embodiment of the present invention, the protection grille 7 is removably engaged to the conduit 3 of the structure 2 of the portable blower 1. In particular, the protection grille 7 can be removably engaged to a substantially tubular body 11 (figures 2 and 4 to 7), for example to an outer cap of the flow generator device 6, connectable to the structure 2 of the portable blower 1 or to a blowing accessory 12 applicable on the structure 2 of the portable blower 1 to prolong the conduit 3 of the latter.

In accordance with a further embodiment of the present invention, the protection grille 7 is made in a single piece with the conduit 3 of the structures 2 of the portable blower 1.

In accordance with the embodiment solution illustrated in figures 2 and 4 to 7, the protection grille 7 is made in a single piece with the tubular body 11, i.e., the outer cap, of the flow generator device 6 defining a portion of the conduit 3 of the structure 2 of the portable blower 1 when it is connected to the latter or to the blowing accessory 12 of the portable blower 1.

Advantageously, the protection grille 7 is made of Acrylonitrile Butadiene Styrene (ABS). It is also possible to envisage that the protection grille 7 can be made of Polycarbonate (PC) or Polyamide (PA) or again in polyamide (PA) reinforced with glass fibres.

<u>Advantages</u>

The present invention allows to solve the problems found in the prior art and to obtain the following advantages. Firstly, the protection grille whose elements of the relative reticular structure each have the aerodynamic wing profile described above, ensures high levels of efficiency in the definition of the blowing air flow in output from the portable blower.

The increase in the efficiency of the output air flow is obtained from reducing the resistance of the protection grille structure. Furthermore, the shaping of the protection grille elements according to an aeronautical profile allows a significant reduction of turbulence or recirculation, ensuring a homogeneous, linear and laminar air flow in output.

**Claims**

1. Portable blower (1) comprising:

   - a structure (2), at least partially hollow, defining at least one conduit (3) for the transit of an air flow between a suction zone (4) and a blowing end (5), at which a blowing opening (10) of the portable blower (1) is defined;
   - a flow generator device (6) operatively arranged inside the structure (2) and/or the conduit (3) which is switchable between a non-operating condition, in which no air flow is generated along the conduit (3), of the structure (2) and an operating condition, in which an air flow is generated along the conduit (3) of the structure (2) between the suction zone (4) and the blowing end (5) and/or the blowing opening (10);
   - a protection grille (7) arranged along the conduit (3) of the structure (2) of the portable blower (1) between the flow generator device (6) and the blowing opening (10), the protection grille (7) having a substantially reticular structure (8) in which one or more elements (8a, 8b) of the reticular structure (8) have an aerodynamic profile (9), optionally a wing profile, defined between a rounded attachment edge (9a) facing the flow generator device (6) and an outlet edge (9c), the aerodynamic profile (9) having maximum thickness in an intermediate zone (9b) interposed between the attachment edge (9a) and the outlet edge (9c), the one or more elements (8a, 8b) of the reticular structure (8) having at least one among an upper, or extrados, surface and a lower, or intrados, surface, of convex shape.

2. Portable blower (1) according to claim 1, wherein the upper or extrados surface of the aerodynamic profile (9) is a convex surface and/or the lower or intrados surface of the aerodynamic profile (9) is a convex surface.

3. Portable blower (1) according to any one of the preceding claims, wherein the aerodynamic profile (9) is substantially symmetrical in transverse section.

4. Portable blower (1) according to any one of the preceding claims, wherein the aerodynamic profile (9) has the attachment edge (9a) substantially rounded and/or the outlet edge (9c) substantially rounded.

5. Portable blower (1) according to any one of the preceding claims, wherein the attachment edge (9a) of the aerodynamic profile (9) is approximately an arc of circumference with a radius proportional to, in particular proportional to the square of, a maximum thickness of the aerodynamic profile (9) expressed as a fraction of the chord, defined as the imaginary segment joining the attachment edge (9a) to the outlet edge (9c) of the aerodynamic profile (9), optionally the aerodynamic profile (9) having a chord, defined as the imaginary segment joining the attachment edge (9a) to the outlet edge (9c) of the aerodynamic profile (9), with a straight trend.

6. Portable blower (1) according to any one of the preceding claims, wherein the aerodynamic profile (9) is a NACA profile, in particular a symmetrical NACA profile, optionally a symmetrical four-digit NACA profile, even more optionally a four-digit NACA profile in which the first two digits are equal to zero, i.e., null, preferably a NACA 0015 profile.

7. Portable blower (1) according to any one of the preceding claims, wherein the attachment edge (9a) of the

aerodynamic profile (9) is approximately an arc of circumference with radius (r) defined by:

$$r = 1{,}1 \cdot t^2$$

where t is the maximum thickness expressed as a fraction of the chord of the aerodynamic profile (9).

8.  Portable blower (1) according to any one of the preceding claims, wherein the maximum thickness of the aerodynamic profile (9) is comprised between 10% and 20% of a length of the chord, defined as the imaginary segment joining the attachment edge (9a) to the outlet edge (9c) of the aerodynamic profile (9), in particular the maximum thickness of the aerodynamic profile (9) is 15% percent of the length of the chord.

9.  Portable blower (1) according to any one of the preceding claims, in the form of the aerodynamic profile (9) generated using the relationship:

$$y_t = 5tc \left[ 0{,}2969 \sqrt{\frac{x}{c}} + (-0{,}1260)\left(\frac{x}{c}\right) + (-0{,}3516)\left(\frac{x}{c}\right)^2 + 0{,}2843\left(\frac{x}{c}\right)^3 + (-0{,}1015)\left(\frac{x}{c}\right)^4 \right] .$$

in which:

-   • c is the length of the chord;
-   • x is the position along the chord from 0 to c;
-   • $y_t$ is half the thickness at a given value of x;
-   • $t$ is the maximum thickness expressed as a fraction of the chord;

the coordinates of the wing back (x+, y+) and the coordinates of the wing belly (x-, y-) respectively being:

-   • wing back: x+=x and y+=y
-   • wing belly: x-=x and y-=-y

10. Portable blower (1) according to any one of the preceding claims, wherein one or more elements (8a, 8b) of the reticular structure (8) of the protection grille (7) are a plurality of elements (8a, 8b), each having said aerodynamic profile (9).

11. Portable blower (1) according to any one of the preceding claims, wherein the intermediate zone (9b) which is thickened with respect to the attachment edge (9a) and the outlet edge (9c) of the aerodynamic profile (9) of each element (8a, 8b) of the reticular structure (8) of the protection grille (7) has a greater thickness near the attachment edge (9a) and/or a lesser thickness near the outlet edge (9c).

12. Portable blower (1) according to any one of the preceding claims, wherein the one or more elements (8a, 8b) of the reticular structure (8) of the protection grille (7) comprise:

    - a first series of a plurality of elements (8a) arranged according to a first trend, in particular the first trend being an annular trend, the elements (8a) arranged according to the first trend having said aerodynamic profile (9)
    - a second series of a plurality of elements (8b) arranged in accordance with a second trend, in particular the second trend being a radial trend, the elements (8b) arranged in accordance with the second trend having said aerodynamic profile (9).

13. Portable blower (1) according to any one of the preceding claims the elements (8b), wherein the reticular structure (8) of the protection grille (7) comprises:

    - one or more annular elements (8a), optionally two annular elements (8a), in particular the annular elements (8a) of the reticular structure (8) of the protection grille (7) having said aerodynamic profile (9) and extending substantially concentrically and/or coaxially to each other, optionally substantially parallel to the inner profile of the conduit (3) of the structure (2) of the portable blower (1) at the position of the protection grille (7);
    - a plurality of radial elements (8b) intersecting the annular elements (8a), in particular the annular elements (8a) of the reticular structure (8) of the protection grille (7) having said aerodynamic profile (9).

14. Portable blower (1) according to the preceding claim, wherein each radial element (8b) of the reticular structure (8) of the protection grille (7) has:

- a first portion (8c) extending substantially perpendicularly to at least one annular element (8a) of the same reticular structure (8), optionally to the outermost annular element (8a) of the reticular structure (8), in particular to the annular element (8a) of the reticular structure (8) closest to the inner profile of the conduit (3) of the structure (2) of the portable blower (1);
- a second portion (8d) extending at least in part according to an inclined orientation with respect to at least one annular element (8a) of the reticular structure (8), optionally to the annular element (8a) of the innermost reticular structure (8), in particular to the annular element (8a) of the reticular structure (8) farthest from the inner profile of the conduit (3) of the structure (2) of the portable blower (1).

15. Portable blower (1) according to the preceding claim, wherein:

- the first portion (8c) of each radial element (8b) of the reticular structure (8) of the protection grille (7) defines with the outermost annular element (8a) of the same reticular structure (8) in the engagement point with the latter, two angles which are each opposite by about 90°, in particular the first portion (8c) of each radial element (8b) of the reticular structure (8) of the protection grille (7) defining with the inner profile of the conduit (3) of the structure (2) of the portable blower (1) in the engagement point of the radial element (8b) to the structure (2) of the portable blower (1), two angles which are each opposite by about 90°;
- the second portion (8d) of each radial element (8b) of the reticular structure (8) of the protection grille (7) defines with the annular element (8a) of the innermost reticular structure (8), optionally the annular element (8a) of the reticular structure (8) farthest from the inner profile of the conduit (3) of the structure (2) of the portable blower (1), two different angles which are opposite by a 90° angle, one angle being acute and the other being obtuse, optionally the second portion (8d) of each radial element (8b) of the reticular structure (8) of the protection grille (7) defining with the annular element (8a) of the outermost reticular structure (8), optionally the annular element (8a) of the reticular structure (8) closest to the inner profile of the conduit (3) of the structure (2) of the portable blower (1), two angles which are opposite by about 90°.

FIG.1

EP 4 477 803 A1

FIG.2

FIG.3

FIG.4

FIG.5

FIG.6

FIG.7

EP 4 477 803 A1

Europäisches
Patentamt

European
Patent Office

Office européen
des brevets

# EUROPEAN SEARCH REPORT

Application Number

EP 24 17 9246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 473 416 A (SUN LUEN ELECTRICAL MFG CO LTD) 1 April 2015 (2015-04-01) * figures 5,6 * | 1-3,5-11 | INV. E01H1/08 A01G20/47 |
| X | KR 2013 0010763 A (UNIX ELECTRONICS CO LTD [KR]) 29 January 2013 (2013-01-29) * figures 4,5 * | 1-3,5-11 | |
| X | US 2016/309661 A1 (EAKINS JR CHARLES A [US] ET AL) 27 October 2016 (2016-10-27) | 1,4 | |
| Y | * paragraphs [0027] - [0033]; figures 3,7 | 12,13 | |
| A | * | 14,15 | |
| Y | EP 3 872 349 A1 (TECHTRONIC CORDLESS GP [US]) 1 September 2021 (2021-09-01) | 12,13 | |
| A | * paragraphs [0029] - [0036]; figure 3b * | 14,15 | |

TECHNICAL FIELDS
SEARCHED      (IPC)

E01H
A01G
A45D

The present search report has been drawn up for all claims

| Place of search | Date of completion of the search | Examiner |
|---|---|---|
| Munich | 21 October 2024 | Saretta, Guido |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 & : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 17 9246

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | | Publication date | Patent family member(s) | | Publication date |
|---|---|---|---|---|---|
| CN 104473416 | A | 01-04-2015 | NONE | | |
| KR 20130010763 | A | 29-01-2013 | NONE | | |
| US 2016309661 | A1 | 27-10-2016 | CA | 2927983 A1 | 23-10-2016 |
| | | | CN | 106065583 A | 02-11-2016 |
| | | | US | 2016309661 A1 | 27-10-2016 |
| EP 3872349 | A1 | 01-09-2021 | AU | 2021101003 A4 | 29-04-2021 |
| | | | CA | 3109957 A1 | 26-08-2021 |
| | | | CN | 211898097 U | 10-11-2020 |
| | | | EP | 3872349 A1 | 01-09-2021 |
| | | | US | 2021259167 A1 | 26-08-2021 |

EPO FORM P0459

For more details about this annex : see Official Journal of the European Patent Office, No. 12/82